# EUROPEAN PATENT APPLICATION

(11) **EP 2 664 769 A2**
(43) Date of publication of application: **20.11.2013**
(21) Application number: 12734342.4
(22) Date of filing: 11.01.2012
(51) Int. Cl.: F02D 11/02, F02D 41/04, F02D 29/00

(54) **SYSTEM FOR SELECTIVE USE OF PEDAL FOR CONTROLLING NUMBER OF REVOLUTION FOR ENGINE OF WORK VEHICLE**

(30) Priority: 11.01.2011 KR 20110002690
(71) Applicant: Daedong Industrial co. Ltd., Dalsung-Gun, Daegu 635-806 (KR)
(72) Inventor: PARK, Sang Rae, Changnyeong-gun Gyeongsangnam-do 635-806 (KR); KWON, O Hyun, Changnyeong-gun Gyeongsangnam-do 635-806 (KR)
(74) Representative: Caspary, Karsten
(86) International application number: PCT/KR2012/000280
(87) International publication number: WO 2012/096518

(57) **Abstract**

Disclosed is a system for a selective use of a pedal for controlling the number of revolution for an engine of a work vehicle. The system for a selective use of a pedal according to an embodiment of the present invention comprises: a foot accelerator pedal sensor for detecting the maneuvering location of a foot accelerator pedal; a hand accelerator lever sensor for detecting the maneuvering location of a hand accelerator lever; a pedal select switch that is switched selectively by a user for a selective or a simultaneous use of the foot accelerator pedal or the hand accelerator lever; an engine control unit (ECU) that is electrically connected to the pedal select switch, and executes engine control at the number of revolution for the engine set by the foot accelerator pedal or the hand accelerator lever.

## Description

### [Technical Field]

The present invention relates to a system for selective use of a pedal for engine RPM control and, more particularly, to a system for selective use of a pedal for engine RPM control in a work vehicle equipped with an electronic engine, which is configured to selectively use a pedal related to the engine RPM control, i.e., engine speed control.

### [Background Art]

A work vehicle, for example, an agricultural vehicle such as a tractor is structurally the same as a typical car but is equipped with a powerful engine to provide good traction. Thus, the agricultural vehicle is mainly used for agricultural purposes, and a working machine (e.g., rotary machine) suitable for seed covering or land leveling work may be selectively attached to the rear of the agricultural vehicle if necessary for the agricultural purposes.

In the agricultural vehicle, the torque for driving the working machine is generated in a main engine of the agricultural vehicle and transferred to the working machine through a transmission case (not shown) and a power takeoff (PTO) shaft projecting from the rear of the agricultural vehicle. Here, the engine speed, i.e., the engine RPM is controlled depending on the amount of a driver's accelerator pedal operation.

A conventional agricultural vehicle includes two accelerator pedals for convenience of operations related to the movement of the working machine depending on the work environment or the driver's position. One is a foot accelerator pedal that is used when the driver sitting on a driver's seat performs general works, and the other is a hand pedal (hereinafter referred to as "hand accelerator lever") used for the operation of the working machine when the operation of the foot accelerator pedal is difficult, e.g., when the driver works in a standing position.

In a conventional agricultural vehicle equipped with a mechanical engine, the food accelerator pedal and the hand accelerator lever are interconnected by means of a wire during an idle operation of the engine and, and thus the engine RPM is controlled by a change in length of the wire according to a change in position of the foot accelerator pedal and/or the hand accelerator lever.

In particular, to provide an environment for the selective use of the foot accelerator pedal and the hand accelerator lever, the conventional agricultural vehicle with the mechanical engine is equipped with a device for the implementation of the selective use of the pedal such that the engine RPM is controlled by one of the pedals, which has a larger change in the length of the wire according to the change in the position of the foot accelerator pedal and the hand accelerator lever.

However, in the conventional agricultural with the mechanical engine which controls the engine RPM using the wire method, the engine RPM is controlled in such a mechanical manner using the wire, and thus it is difficult to precisely control the engine RPM. Moreover, the layout structure of the wire for implementing the selective use of the pedal is complicated, and a return spring or other additional components are required, resulting in a complicated configuration of the device.

Recently, to make up for the drawbacks of the mechanical engine, there is a tendency to mount an electronically controlled engine (hereinafter referred to as "electronic engine"). In an agricultural vehicle equipped with the electronic engine, the displacement of the pedal due to the driver's operation is detected by a sensor, and the detection value of the sensor is calculated as an engine RPM control output value to control the engine output, thus providing more precise control.

When the electronic engine is used, it is possible to make the device simpler and enable more precise engine control, compared to the conventional mechanical engine in which the output value is controlled by the wire method. However, in the case of the known agricultural vehicle equipped with the electronic engine, a separate system for the selective use of the foot accelerator pedal and the hand accelerator lever as in the mechanical engine is not provided, and thus it is impossible to selectively use the two pedals, which is problematic.

### [Disclosure]

### [Technical Problem]

Accordingly, the present invention has been made to solve the above-described problems, and an object of the present invention is to provide a system for selective use of a pedal for engine RPM control in a work vehicle equipped with an electronic engine, which allows a driver to selectively use a foot accelerator pedal and a hand accelerator pedal.

### [Technical Solution]

To accomplish the above objects of the present invention, according to an aspect of the present invention there is provided a system for selective use of a pedal for engine RPM control in a work vehicle equipped with an electronic engine, the system comprising: a foot accelerator pedal sensor which detects an operation position of a foot accelerator pedal; a hand accelerator lever sensor which detects an operation position of a hand accelerator lever; a pedal select switch which is selectively switched by a user for selective or simultaneous use of the foot accelerator pedal and the hand accelerator lever; and an engine control unit (ECU) which is electrically connected to the pedal select switch and performs engine control at an engine RPM set by the foot accelerator pedal or the hand accelerator lever.

In an embodiment, if the pedal select switch is ON, the ECU may recognize that both the foot accelerator pedal and the hand accelerator lever are all used, and if the pedal select switch is OFF, the ECU may recognize that only the hand accelerator lever is used.

Moreover, if both the foot accelerator pedal and the hand accelerator lever are all used as the pedal select switch is set to ON, the ECU may select a higher value (i.e., a higher speed side) from output values related to the engine RPM control and set by the foot accelerator pedal and the hand accelerator lever and may perform the engine RPM control at an RPM corresponding to the selected value.

The foot accelerator pedal sensor and the hand accelerator lever may output high and low electrical signals corresponding to the position values of the pedals according to a change in position of the foot accelerator pedal and the hand accelerator lever, the electrical signals being two electrical signals including a main signal and an auxiliary signal, and the output intensities of the main signal and the auxiliary signal may be set to have a constant difference within a predetermined range.

If the output intensities of the main signal and the auxiliary signal fall within the predetermined range, the ECU may recognize that the electrical signal output from the foot accelerator pedal sensor or the hand accelerator lever sensor is a normal signal and may control the engine at an RPM by the main signal at the corresponding pedal position.

Otherwise, if the output intensities of the main signal and the auxiliary signal exceed the predetermined range, the ECU may recognize that the electrical signal output from the foot accelerator pedal sensor or the hand accelerator lever sensor is not the normal signal and may output an error signal.

### [Advantageous Effects]

According to an embodiment of the present invention, it is possible to implement a system capable of supporting the selective use of a foot accelerator pedal and a hand accelerator lever even in a work vehicle equipped with an electronic engine. Thus, even in the work vehicle equipped with the electronic engine, it is possible to select a pedal, which is easier to operate from the two pedals depending on the work environment or a driver's position, to effectively control the engine speed, i.e., the engine RPM, thus ensuring convenience of the pedal operation and implementing a work vehicle equipped with an electronic vehicle which can efficiently and effectively control the vehicle speed.

### [Description of Drawings]

FIG. 1 is a block diagram schematically showing the configuration of a system for selective use of a pedal for engine RPM control in a work vehicle in accordance with an embodiment of the present invention.
FIG. 2 is a flowchart for implementing the selective use of the pedal by the system of the present invention.

### Description of Reference Numerals

10: foot accelerator pedal
12: foot accelerator pedal sensor
20: hand accelerator lever
22: hand accelerator lever sensor
30: pedal select switch
40: engine control unit (ECU)
90: engine

### [Mode for Invention]

Hereinafter, preferred embodiments of the present invention will be described in detail with reference to the accompanying drawings.

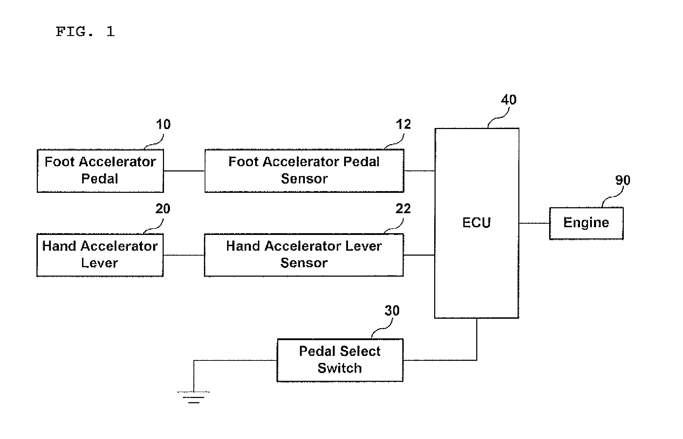

FIG. 1 is a block diagram schematically showing the configuration of a system for selective use of a pedal for engine RPM control in a work vehicle in accordance with an embodiment of the present invention.

Referring to FIG. 1, the system of the present invention comprises a pedal select switch 30 which is selectively switched by a user for selective or simultaneous use of a foot accelerator pedal 10 and a hand accelerator lever 20 and an engine control unit (ECU) 40 which performs engine control in connection with the switching operation of the pedal select switch 30.

The pedal select switch 30 is electrically connected to a battery (now shown) and the ECU 40 and outputs a command for the selective or simultaneous use of two pedals (i.e., the foot accelerator pedal 10 and the hand accelerator lever 20). If a command signal related to the pedal selection is input according to the operation of the pedal select switch 30, the ECU 40 outputs a command signal for controlling the engine RPM at an RPM set by the corresponding selected pedal.

An engine 90 is provide with a common rail type fuel injection unit (not shown) which electronically controls the amount of fuel injected or the injection timing, and the operation of the fuel injection unit is controlled in response to an RPM control signal of the ECU 40. That is, the RPM of the engine may be controlled at a value set by the pedal through the control of the fuel injection unit in response to a control command of the ECU 40.

The ECU 40 is electrically connected to a foot accelerator pedal sensor 12 and a hand accelerator lever sensor 22 which detect the operation position of the foot accelerator pedal 10 and the hand accelerator lever 20. Accordingly, the ECU 40 calculates and outputs a signal for fuel injection control based on the detection value of the pedal operation position input from the foot accelerator pedal sensor 12 or the hand accelerator lever sensor 22.

In connection with the operation of the pedal select switch 30, if the pedal select switch 30 is set to ON by a driver (or user), the ECU 40 recognizes that both the foot accelerator pedal 10 and the hand accelerator lever 20 are all used. On the contrary, if the pedal select switch 30 is OFF, the ECU 40 recognizes that only the hand accelerator lever 20 is used,.

Of course, if the pedal select switch 30 is set to ON by the driver (or user), the ECU 40 may recognize that only the hand accelerator lever 20 is used, and if the pedal select switch 30 is OFF, the ECU 40 may recognize that both the foot accelerator pedal 10 and the hand accelerator lever 20 are used at the same time, which may also be included in the scope of the present invention.

The case where if the pedal select switch 30 is ON, the ECU 40 recognizes that both the foot accelerator pedal 10 and the hand accelerator lever 20 are all used will be described by an example. When the pedal select switch 30 is ON, the ECU 40 selects a higher value (i.e., a higher speed side) from output values related to the engine RPM control and set by the foot accelerator pedal 10 and the hand accelerator lever 20 and performs control for maintaining the engine RPM at the selected value corresponding to the higher speed side.

The foot accelerator pedal sensor 12 and the hand accelerator lever sensor 22 may output high and low electrical signals corresponding to the position values of the pedals according to the change in the position of the foot accelerator pedal 10 and the hand accelerator lever 20. In this embodiment, the foot accelerator pedal sensor 12 and the hand accelerator lever sensor 22 output two electrical signals including a main signal and an auxiliary signal as the electrical signals corresponding to the position values of the pedals.

The output intensities of the main signal and the auxiliary signal are preset to have a constant difference within a predetermined range. If the output intensities of the main signal and the auxiliary signal fall within the predetermined range, the ECU 40 recognizes that the electrical signal output from the foot accelerator pedal sensor 12 or the hand accelerator lever sensor 22 is a normal signal and thus controls the engine at an RPM by the main signal at the corresponding pedal position.

If the output intensities of the main signal and the auxiliary signal exceed the predetermined range, the ECU 40 recognizes that the electrical signal output from the foot accelerator pedal sensor 12 or the hand accelerator lever sensor 22 is not the normal signal and, in this case, outputs an error signal through a user notification means such as a warning light.

The control process for the selective use of the pedal performed by the system having the above-described configuration will now be described in more detail in connection with the operation of the system according to the present invention.

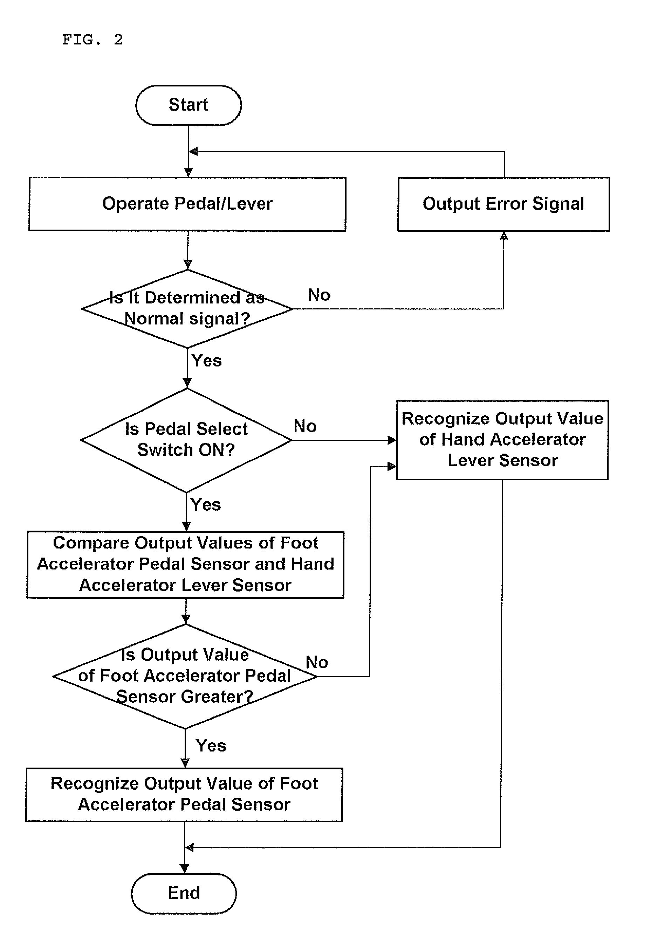

FIG. 2 is a flowchart for implementing the selective use of the pedal by the system of the present invention.

Referring to FIG. 2, if a pedal operation signal is detected, the ECU first determines whether the corresponding signal is a normal signal and, if it is determined that the corresponding signal is not a normal signal, outputs an error signal to the outside through a user notification means such as a warning light. The system setup for the determination of the normal signal has been previously described in detail, and thus a repetitive description thereof will be omitted.

In a state where the detection signal in response to the pedal operation is the normal signal, if the pedal select switch is set to ON by a driver (or user), the ECU recognizes that both the foot accelerator pedal and the hand accelerator lever are all used.

In a state where the pedal select switch is set to ON, if the foot accelerator pedal and/or the hand accelerator lever are operated, the ECU compares the output values related to the engine RPM control set according to the positions of the foot accelerator pedal and the hand accelerator lever, selects a higher value (i.e., a higher speed side), and starts the engine RPM control based on the set RPM.

For example, if the foot accelerator pedal is in an operation position where the engine rotates at 2000 RPM and the hand accelerator lever is in an operation position where the engine rotates at 2300 RPM, the ECU controls the engine to reach an engine RPM, i.e., 2300 RPM, set by the hand accelerator lever.

In the case where the pedal select switch is switched OFF during operation or where there is no operation of the pedal select switch from the beginning, the ECU recognizes that only the hand accelerator lever is used, and thus the engine RPM is controlled based on the detection value of the hand accelerator lever sensor according to the change in the position of the hand accelerator lever, and in this case, the detection value of the foot accelerator pedal related to the operation of the foot accelerator pedal is ignored.

The invention has been described in detail with reference to preferred embodiments thereof. However, it will be appreciated by those skilled in the art that changes may be made in these embodiments without departing from the principles and spirit of the invention, the scope of which is defined in the appended claims and their equivalents.

## Claims

1. A system for selective use of a pedal for engine RPM control in a work vehicle equipped with an electronic engine, the system comprising:
a foot accelerator pedal sensor which detects an operation position of a foot accelerator pedal;
a hand accelerator lever sensor which detects an operation position of a hand accelerator lever;
a pedal select switch which is selectively switched by a user for selective or simultaneous use of the foot accelerator pedal and the hand accelerator lever; and
an engine control unit (ECU) which is electrically connected to the pedal select switch and performs engine control at an engine RPM set by the foot accelerator pedal or the hand accelerator lever.

2. The system of claim 1, wherein if the pedal select switch is ON, the ECU recognizes that both the foot accelerator pedal and the hand accelerator lever are all used, and if the pedal select switch is OFF, the ECU recognizes that only the hand accelerator lever is used.

3. The system of claim 2, wherein if both the foot accelerator pedal and the hand accelerator lever are all used as the pedal select switch is set to ON, the ECU selects a higher value (i.e., a higher speed side) from output values related to the engine RPM control and set by the foot accelerator pedal and the hand accelerator lever and performs the engine RPM control at an RPM corresponding to the selected value.

4. The system of claim 1, wherein the foot accelerator pedal sensor and the hand accelerator lever output high and low electrical signals corresponding to the position values of the pedals according to a change in position of the foot accelerator pedal and the hand accelerator lever, the electrical signals being two electrical signals including a main signal and an auxiliary signal.

5. The system of claim 4, wherein the output intensities of the main signal and the auxiliary signal are set to have a constant difference within a predetermined range.

6. The system of claim 5, wherein if the output intensities of the main signal and the auxiliary signal fall within the predetermined range, the ECU recognizes that the electrical signal output from the foot accelerator pedal sensor or the hand accelerator lever sensor is a normal signal and controls the engine at an RPM by the main signal at the corresponding pedal position.

7. The system of claim 5, wherein if the output intensities of the main signal and the auxiliary signal exceed the predetermined range, the ECU recognizes that the electrical signal output from the foot accelerator pedal sensor or the hand accelerator lever sensor is not the normal signal and outputs an error signal.
